# EUROPEAN PATENT APPLICATION

(11) **EP 3 614 527 A1**
(43) Date of publication of application: **26.02.2020**
(21) Application number: 18190788.2
(22) Date of filing: 24.08.2018
(51) Int. Cl.: H02J 50/70, B60L 53/12, B60L 53/35, B60L 53/122, H02J 50/10

(54) **SYSTEM AND METHOD FOR WIRELESS CHARGING OF ELECTRIC VEHICLES**

(71) Applicant: Siemens Aktiengesellschaft, 80333 München (DE)
(72) Inventor: BHATIA, Rahul, 560100 Bangalore, Karnataka (IN); VENKATRAMANI, Anand, 560076 Bangalore (IN)
(74) Representative: Isarpatent

(57) **Abstract**

A wireless charging system (100) and a method of wirelessly charging an electric vehicle (101) are provided. The wireless charging system (100) includes a charge transfer module (102) and a charge reception module (103). The charge transfer module (102) includes a flux concentrator (102A) and a primary winding (102B) at least partially wound around the flux concentrator (102A) such that flux is generated in the flux concentrator (102A) when the primary winding (102B) is energized. The charge reception module (103) is mountable on the electric vehicle (101) and includes a flux concentrator free secondary winding (103A) coupling with the flux. The wireless charging system (100) is configured so as to achieve an improved flux coupling between the charge transfer module (102) and the charge reception module (103) by allowing maximum flux transfer via a higher permeable medium (105A) of the flux concentrator (102A).

## Description

The present invention relates to wireless power transfer. More particularly, the present invention relates to a system and a method for wireless power transfer to electric vehicles.

Wireless charging of electric vehicles typically, has multiple benefits including on-the-go charging, charging without cables and, overall ease of operation for the users of electric vehicles. Compared to electric vehicles, conventional vehicles powered using fossil fuels typically deliver a large driving range with quick refuelling options. To overcome this issue and to increase usability of electric vehicles, faster charging is desired.

Conventional methods and systems available for wireless charging of electric vehicles typically involve air coupled coils with one coil positioned on ground and other coil positioned on the vehicle for transferring energy and charging the electric vehicle. However, the coupling happens via air, because of which the mutual inductance is low. As a result of low mutual inductance, the coupling becomes weak thereby requiring higher frequency to increase voltage and power being transferred. However, higher frequencies result in higher losses and bulkier sized electronics associated with the wireless charging system. Moreover, due to weaker coupling the power transfer becomes difficult especially for electric vehicles with higher ground clearance, thereby, resulting in slower charging of the electric vehicles. KR1011041200000 patent discloses an induction power collecting apparatus while using a low frequency, and includes a pair of coils each wound on a core, that is, a flux concentrator, such that one core and coil is positioned on the ground, and another core and coil is positioned on the electric vehicle. The coil wound around the core in the charging system is energized and flux is generated in the core which is then coupled with the coil and core positioned on the electric vehicle. However, this increases weight of the vehicle as one of the cores is mounted on the electric vehicle. Moreover, there is additional effort required in alignment of the two cores in order to transfer the energy. Furthermore, the problems associated with air based weak mutual coupling resulting in a slower charging of the vehicle persist.

Therefore, it is an object of the present invention to provide a wireless charging system for an electric vehicle of the aforementioned kind that supports faster charging of electric vehicles wirelessly, agnostic to their ground clearance, without increasing losses, and without increasing size of the electronics involved therein.

The present invention disclosed herein achieves the aforementioned object by providing a wireless charging system for an electric vehicle comprising a charge transfer module and a charge reception module, that increases mutual coupling without physical connection there-between. An electric vehicle is used herein to describe any remote system configured to be charged electrically, an example of which is a vehicle that includes, as part of its locomotion capabilities, electrical power derived from a chargeable energy storage device such as one or more rechargeable electrochemical cells, etc. As nonlimiting examples, some electric vehicles may be hybrid electric vehicles that include besides electric motors, a traditional combustion engine for direct locomotion or to charge the vehicle's battery. Other electric vehicles may draw all locomotion ability from electrical power. An electric vehicle is not limited to an automobile and may include motorcycles, carts, scooters, and the like. By way of example and not limitation, a remote system is described herein in the form of an electric vehicle. Furthermore, other remote systems that may be at least partially powered using a chargeable energy storage device are also contemplated.

The charge transfer module comprises a flux concentrator and a primary winding, such as an induction coil, at least partially wound around the flux concentrator such that flux is generated in the flux concentrator when the primary winding is energized. In an embodiment according to the present invention, a local distribution module and or other grid connection module may be connected to the charge transfer module to provide an alternating current (AC) or a direct current (DC) supply to the charge transfer module in order to energize the flux concentrator. The flux concentrator is made of a material having permeability greater than permeability of air. Advantageously, the material is cold-rolled grain-oriented (CRGO) steel. Due to use of this material, the flux generated in the flux concentrator is a high density flux. Density of flux refers to an amount of flux passing through a unit surface area of the material. For example, density of flux passing through CRGO is higher than that through air. In an embodiment according to the present invention, the charge transfer module is adjustably mounted on an elevation device, thereby allowing the flux concentrator of the charge transfer module to increase and/or decrease proximity with the charge reception module based on ground clearance of the electric vehicle and based on the flux being coupled there-between such that a maximum flux is coupled, that is, maximum energy transfer happens there-between.

The charge reception module comprises a flux concentrator free secondary winding, such as one or more induction coils, coupling with the flux, and is mountable on the electric vehicle. Advantageously, the charge reception module does not comprise a flux concentrator, thereby precluding physical bulkiness of the electric vehicle. The secondary winding is positioned in proximity of the primary winding so as to couple with the flux, that is, the high density flux, generated in the flux concentrator via a high permeable medium and a low permeable medium, for example, air. The high permeable medium is provided by the material of which the flux concentrator is configured.

Advantageously, the wireless charging system disclosed herein increases the mutual coupling between the charge transfer module and the charge reception module by generating a near closed path via the high permeable medium between the charge transfer module and the charge reception module. As used herein, "near closed path" refers to a flux path generated between the charge transfer module and the charge reception module which comprises a first path via a high permeable medium provided by the material of the flux concentrator, cascaded with a second path via a low permeable medium provided, for example, via air. Advantageously, developed length of the first path is higher than that of the second path thereby, creating a near closed path via the high permeable medium resulting in an improved mutual coupling.

Also disclosed herein, is a method of wirelessly charging an electric vehicle by employing the afore-mentioned wireless charging system. The method disclosed herein comprises energizing a primary winding at least partially wound around a flux concentrator of a charge transfer module of the wireless charging system, to generate flux in the flux concentrator, positioning the charge transfer module and a charge reception module of the wireless charging system such that a maximum flux is coupled with a secondary winding of the charge reception module, and maintaining the charge transfer module and the charge reception module in their respective positions until one or more predefined charging conditions are attained. As used herein, predefined charging conditions comprise a power threshold defining a minimum amount of power to be transferred from the charge transfer module to the charge reception module. This amount of power may be determined based on a user selection and/or corresponding to a monetary transaction made, that is, a monetary value paid in $/kWh. In an embodiment according to the present invention, the predefined charging conditions may also include interruptions occurring during the wireless charging of the electric vehicle with or without user intention. After the predefined charging conditions are attained, the method comprises de-energizing the flux concentrator of the charge transfer module and/or bringing the charge transfer module to its initial position in case the position was adjusted with respect to the charge reception module.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of a wireless charging system for an electric vehicle, comprising a charge transfer module and a charge reception module mounted on the electric vehicle, according to an embodiment of the present invention.
- FIG 2: illustrates flux path generated in the wireless charging system, according to an embodiment of the present invention.
- FIG 3: illustrates a process flow chart of a method of wirelessly charging an electric vehicle by employing a wireless charging system shown in FIG 1, according to an embodiment of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

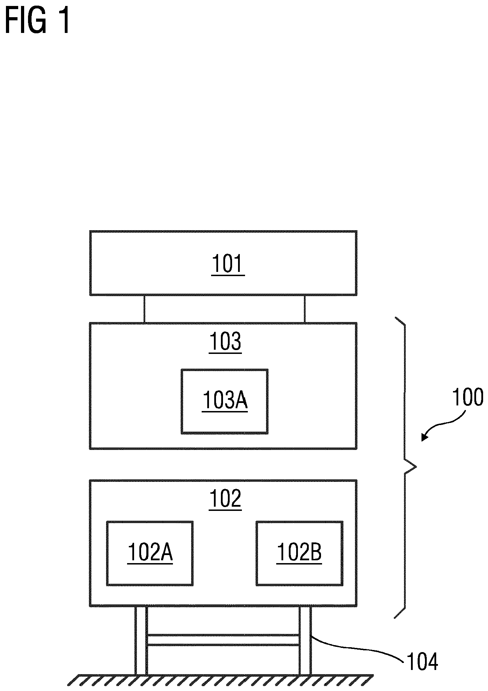

FIG 1 illustrates a block diagram of a wireless charging system 100 for an electric vehicle 101, comprising a charge transfer module 102 and a charge reception module 103 mounted on the electric vehicle 101, according to an embodiment of the present invention. The charge transfer module 102 comprises a flux concentrator 102A and a primary winding 102B at least partially wound on the flux concentrator 102A. The charge reception module 103 comprises a flux concentrator free secondary winding 103A mounted on the electric vehicle 101. The charge transfer module 102 is mounted on an elevation device 104 for adjusting height of the charge transfer module 102 with respect to the positioning of the charge reception module 103 according to ground clearance of the electric vehicle 101.

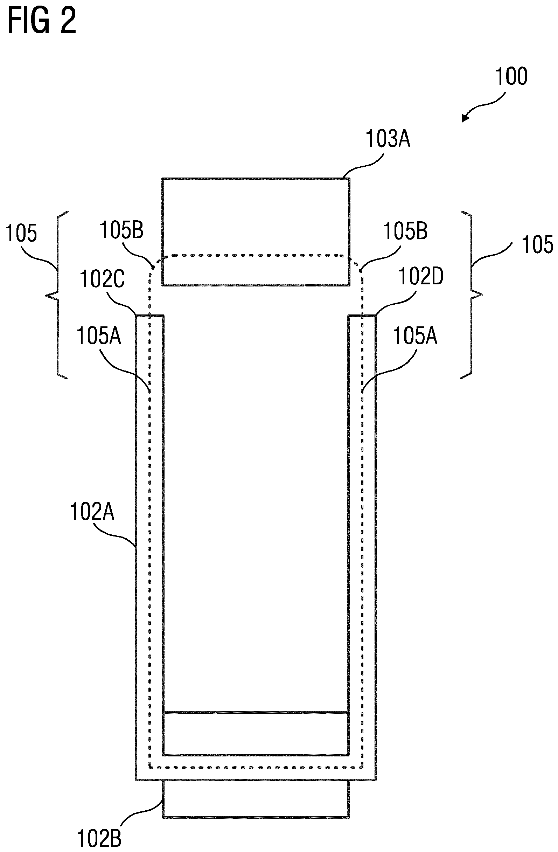

FIG 2 illustrates flux path 105 generated in the wireless charging system 100, according to an embodiment of the present invention. Upon energizing of the primary winding 102B flux is generated in the flux concentrator 102A of the charge transfer module 102 which flows via the flux path 105 shown in the FIG 2. The flux path 105A represents a high permeability path through the flux concentrator 102A and the primary winding 102B. The flux path 105B represents a low permeability path, also referred to as, flux through fringing. As the flux concentrator 102A is made of a material such as cold-rolled grain-oriented (CRGO) steel, the reluctance is lower than that offered by ambient air, which makes the flux follow the flux path 105A in the flux concentrator 102A, between ends 102C and 102D of the flux concentrator 102A. After which, the flux follows the flux path 105B via air to complete the path through the secondary winding 103A. This arrangement increases mutual coupling between the charge transfer module 102A and the charge reception module 102B by increasing amount of flux flow through the high permeable medium compared to the low permeable medium. Thus, without increasing losses and by increasing the mutual coupling between the primary winding 102B and the secondary winding 103A higher power can be delivered to the load, thereby, achieving faster charging of the electric vehicle 101 shown in FIG 1.

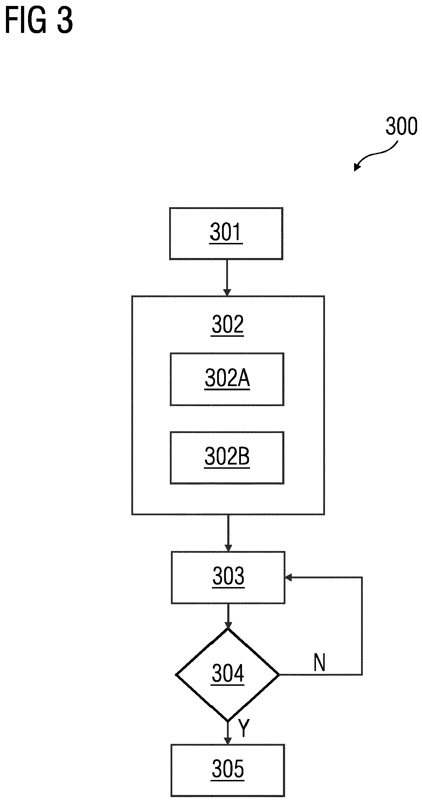

FIG 3 illustrates a process flow chart 300 of a method of wirelessly charging an electric vehicle 101 by employing a wireless charging system 100, shown in FIG 1, according to an embodiment of the present invention. At step 301, the method comprises energizing the primary winding 102B of the charge transfer module in order to generate flux in the flux concentrator 102A. At step 302, the method comprises positioning the charge transfer module 102 and the charge reception module 103 such that a maximum flux is coupled with the secondary winding 103A. At step 302A, the method comprises aligning the electric vehicle 101 over the charge transfer module 102 such that the charge reception module 103 is centrally aligned with respect to the charge transfer module 102. This alignment may be achieved by marking a parking area in which the electric vehicle 101 is being parked. Further to this alignment, at step 302B, the method comprises vertically positioning the charge transfer module 102 at a height that allows maximum flux to be coupled to the secondary winding 103A based on the ground clearance of the electric vehicle 101. The amount of flux coupling is measured via one or more parameters, such as, current, voltage, etc., associated with the wireless charging system 100. At step 303, the method comprises receiving one or more predefined charging conditions. These predefined charging conditions may be received via a user device and/or a user interface associated with the wireless charging system 100. At step 304, the method verifies whether the predefined charging conditions are attained. If not, then the method maintains the charge transfer module 102 and the charge reception module 103 in their respective positions, If yes, then at step 305, the method de-energizes the primary winding 102B thereby, terminating the charging of the electric vehicle 101.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects

### List of reference numerals

100 wireless charging system
101 electric vehicle
102 charge transfer module
102A flux concentrator
102B primary winding
102C, 102D ends of the flux concentrator
103 charge reception module
103A secondary winding
104 elevation device
105 flux path
105A flux path through high permeable medium
105B flux path through low permeable medium

## Claims

1. A wireless charging system (100) for an electric vehicle (101), comprising:
- a charge transfer module (102) comprising a flux concentrator (102A) and a primary winding (102B) at least partially wound around the flux concentrator (102A) such that flux is generated in the flux concentrator (102A) when the primary winding (102B) is energized;
- a charge reception module (103) mountable on the electric vehicle (101) and coupling with the flux;
**characterized in that**
- the charge reception module (103) comprises a flux-concentrator free secondary winding (103A).

2. The wireless charging system (100) according to claim 1, wherein the flux concentrator (102A) is made of a material having permeability greater than permeability of air.

3. The wireless charging system (100) according to claim 2, wherein the material of the flux concentrator (102A) is cold-rolled grain-oriented (CRGO) steel.

4. The wireless charging system (100) according to any one of the preceding claims, wherein the flux generated in the flux concentrator (102A) is a high density flux.

5. The wireless charging system (100) according to the claim 1, wherein the secondary winding (103A) positioned in proximity of the primary winding (102B) couples with the flux generated in the flux concentrator (102A) via a high permeable medium (105A) and a low permeable medium (105B).

6. A method of wirelessly charging an electric vehicle (101), in particular by employing a wireless charging system (100) according to one of the preceding claims, the method comprising:
- energizing a primary winding (102B) at least partially wound around a flux concentrator (102A) of a charge transfer module (102) of the wireless charging system (100) to generate flux in the flux concentrator (102A);
- positioning the charge transfer module (102) and a charge reception module (103) of the wireless charging system (100) such that a predefined flux, in particular maximum flux, is coupled with a secondary winding (103A) of the charge reception module (103); and
- maintaining the charge transfer module (102) and the charge reception module (103) in their respective positions until one or more predefined charging conditions are attained.

7. The method according to claim 6, wherein the predefined charging conditions comprise a power threshold defining a minimum amount of power to be transferred from the charge transfer module (102) to the charge reception module (103).
